# EUROPEAN PATENT SPECIFICATION

(11) **EP 3 190 360 B1**
(45) Date of publication and mention of the grant of the patent: **19.03.2025**
(21) Application number: 16204928.2
(22) Date of filing: 19.12.2016
(51) Int. Cl.: F25B 43/00

(54) **CLOTHES TREATING APPARATUS COMPRISING A VAPOR-LIQUID SEPARATOR**
BEKLEIDUNGSBEHANDLUNGSVORRICHTUNG MIT DAMPF-FLÜSSIGKEIT-SEPARATOR
APPAREIL DE TRAITEMENT DES VÊTEMENTS AVEC SÉPARATEUR VAPEUR-LIQUIDE

(30) Priority: 05.01.2016 KR 20160001191
(43) Date of publication of application: 12.07.2017
(73) Proprietor: LG Electronics Inc., Yeongdeungpo-gu Seoul 07336 (KR)
(72) Inventor: KU, Sejin, 08592 Seoul (KR); KIM, Yeongju, 08592 Seoul (KR); AHN, Taekyoung, 08592 Seoul (KR)
(74) Representative: Vossius & Partner Patentanwälte Rechtsanwälte mbB

(56) References cited:
- JP-A- 2007 255 831
- JP-A- 2008 106 964
- JP-A- 2013 245 917
- JP-A- H02 140 571
- US-A- 4 776 183
- US-A1- 2003 126 883
- US-A1- 2005 217 312
- US-A1- 2012 246 960

## Description

The present invention relates to a clothes treating apparatus.

In general, a heat pump system circulates a refrigerant through an evaporator, a compressor, a condenser, and an expansion valve, and the evaporator absorbs a heat source and the condenser discharges the heat source. Here, the refrigerant absorbs the heat source so as to be changed from a liquid phase to a vapor phase (or a gas phase), and discharges the heat source so as to be changed from the vapor phase to a liquid phase. The gas phase refrigerant is compressed by the compressor and subsequently circulates the condenser, the expansion valve, the evaporator, and the compressor as one cycle.

If a liquid phase refrigerant is introduced together with a vapor phase refrigerant to the compressor, while the compressor operates, the liquid phase refrigerant is compressed, causing damage to the compressor.

Thus, in order to prevent this, a vapor-liquid separator (or an accumulator) is connected to a inlet side of the compressor to separate the liquid phase refrigerant and the vapor phase refrigerant.

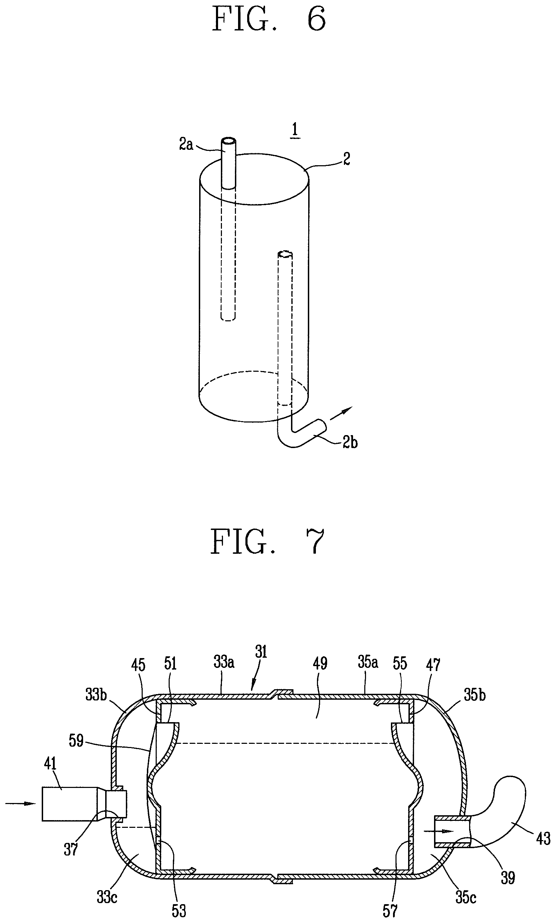

FIG. 6 is a perspective view illustrating a related art vapor-liquid separator.

As illustrated in FIG. 6, a vapor-liquid separator 1 includes a refrigerant inlet pipe 2a provided at an upper portion of the casing 2 to allow a refrigerant discharged from the evaporator to be introduced to the inside of the casing 2, includes a refrigerant discharge pipe 2b provided in a lower portion of the casing 2 to discharge a gas phase refrigerant separated due to a difference in specific gravity of the refrigerant to the compressor, and stores the liquid phase refrigerant separated from the gas phase refrigerant in the casing 2.

However, since the related art vapor-liquid separator 1 is manufactured to be connected to a inlet side of a vertical compressor, it may not be applied to a horizontal compressor advantageously used when a height of an installation space of a compressor is small. If the vapor-liquid separator 1 illustrated in FIG. 6 is connected to a inlet side of the horizontal compressor, the vapor-liquid separator 1 may protrude upwardly from the horizontal compressor, causing a problem that an overall height of the compressor and the vapor-liquid separator 1 is increased against what was intended in the horizontal compressor.

In order to solve the problem, US 4,776,183 discloses a horizontal accumulator disposed in a horizontal direction to be parallel to the horizontal compressor.

Meanwhile, in a case in which a heat pump system is applied to a clothes treating apparatus such as a washing machine, and the like, since a drum and a tub accommodating clothes, or the like, occupies the greatest part of an internal space of the clothes treating apparatus, a disposition space to install all of an evaporator, a condenser, a compressor, an expansion valve, a vapor-liquid separator, and the like, in the remaining space, excluding the drum and the tub, within the clothes treating apparatus is small.

Here, as illustrated in FIG. 7, the horizontal accumulator of US 4,776,183 is not problematic when a inlet 37 and a outlet 39 are positioned on the opposing sides, but in a case in which the horizontal accumulator of US 4,776,183 is disposed in a narrow space, it is possible to form the inlet 37 and the outlet 39 on the same side or in the same direction to avoid interference with respect to other components, and even though the inlet 37 and the outlet 39 are formed on the same side, the following problems arise.

For example, in the structure of the horizontal accumulator of US 4,776,183, in a case in which the inlet 37 and the outlet 39 are positioned together on the left side, when a mixture of a liquid phase and gas phase refrigerant and oil introduced through a first communication opening 51 passes through an upper space of a liquid phase refrigerant storage space, the liquid phase refrigerant and oil are required to be separated and the gas phase refrigerant is required to be returned toward the outlet. However, since a hole allowing the gas phase refrigerant to be returned is not formed in a second partition plate 47, the gas phase refrigerant is not able to be returned.

Here, even if a hold allowing the gas phase refrigerant to be returned is formed in the second partition plate 47, the returned gas phase refrigerant meets the mixture including the sucked liquid phase refrigerant, or the like, causing a problem that it is impossible to separate the gas phase refrigerant and the liquid phase refrigerant, the intrinsic function of the vapor-liquid separator.

US 2003/126883 A1 relates to a gas-liquid separator for an ejector cycle having a tank body which is constructed such that a refrigerant sprayed from a refrigerant inlet forms a spiral stream in the tank body. The tank body has a horizontal longitudinal axis greater than a vertical axis. The refrigerant inlet is located at a distance from the horizontal longitudinal axis of the tank body such that the refrigerant sprayed from the refrigerant inlet generates a turning force and spirally flows.

US 4 776 183 A relates to a lateral type accumulator including a hermetic container which is divided into an intake cell, a discharge cell and a storage chamber between the cells in a horizontal direction by an intake side plate and a discharge side plate. An intake pipe is connected to the intake cell and a discharge pipe is connected to the discharge cell. The accumulator further includes a gas fluid passage from the intake cell to the discharge cell through the intake side and the discharge side plates.

JP 2008 106964 A relates to a horizontal type accumulator comprising a container of cylindrical shape horizontally placed so that its center axis is horizontal. A lead-in pipe and a lead-out pipe of a refrigerant are connected to one end side which is a side facing the container. Additionally there are support plates for preventing vibration of the lead-in pipe and the lead-out pipe.

Therefore, an aspect of the invention is to provide a clothes treating apparats having a vapor-liquid separator which is compactly disposed within a cabinet in a small installation space.

Another aspect of the detailed description is to provide a clothes treating apparatus having a vapor-liquid separator capable of separating a gas phase refrigerant and a liquid phase refrigerant although an inlet and an outlet are formed on the same side of a casing.

These objects are achieved with the features of the claims. An clothes treating apparatus according to the invention is defined in independent claim 1. Further preferred embodiments of the present invention are defined in the dependent claims.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

The accompanying drawings, which are included to provide a further understanding of the invention and are incorporated in and constitute a part of this specification, illustrate exemplary embodiments and together with the description serve to explain the principles of the invention.

In the drawings:
FIG. 1A is a perspective view illustrating an implementation example of a clothes treating apparatus according to the present invention.
FIG. 1B is a perspective view illustrating a configuration in which a heat pump module according to the present invention is disposed above a tub.
FIG. 1C is a rear perspective view illustrating a fixed structure of a PCB case of FIG. 1B.
FIG. 2A is a side view of a compressor of FIG. 1B, viewed from the right side, and FIG. 2B is a cross-sectional view of the compressor of FIG. 2A.
FIG. 3A is a perspective view illustrating a vapor-liquid separator of FIG. 1B.
FIG. 3B is a front view of the vapor-liquid separator of FIG. 3A, viewed from the front side.
FIG. 4 is a cross-sectional view of FIG. 3B, taken along line A-A.
FIG. 5 is a cross-sectional view of FIG. 4, taken along line B-B.
FIG. 6 is a perspective view illustrating a related art vapor-liquid separator
FIG. 7 is a cross-sectional view illustrating a horizontal accumulator disclosed in Patent document D1.

Hereinafter, a vapor-liquid separator and a clothes treating apparatus having the same related to the present disclosure will be described in detail with reference to the accompanying drawings, in which like numbers refer to like elements throughout although the embodiments are different. As used herein, the singular forms "a", "an" and "the" are intended to include the plural forms as well, unless the context clearly indicates otherwise.

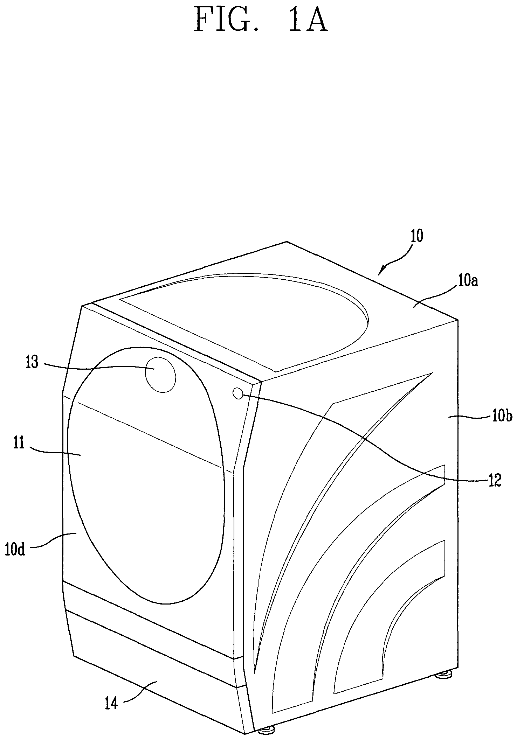

FIG. 1A is a perspective view illustrating an implementation example of a clothes treating apparatus according to the present invention.

A cabinet 10 forms an external frame and an appearance of a clothes treatment apparatus. The cabinet 10 may have a hexahedral shape. The cabinet 10 includes a top cover 10a forming an upper surface of the hexahedron, and may further include a side cover 10b forming opposing sides of the hexahedron, a base cover 10c forming a lower surface of the hexahedron, a front cover 10d forming a front surface of the hexahedron, and a back cover 10e forming a rear surface of the hexahedron.

Here, an opening for introducing the laundry such as clothes, or the like, is formed on the front cover 10d, and a door 11 opening and closing the opening is provided. The door 11 is coupled to a front cover 10d by a hinge on a left side of the opening and a right side of the door 11 may be rotated in a forward/backward direction. An automatic releasing device for automatically releasing the button type door may be provided on a right portion of the door 11 and on a right portion of the opening, so that when a right end portion of the door 11 is pushed to be closed, the door 11 is locked, and when the closed door 11 is pressed once, the door 11 may be opened.

A power button 12 may be provided on a right upper end of the front cover 10d to turn on and off power of the clothes treatment apparatus.

A display unit 13 and a touch type control panel may be formed on an upper end portion of the door 11. When a user performs a washing, spin-drying, or drying operation, an operational state of the clothes treatment apparatus may be visible to the user through the display unit 13. Various functions may be selected or selected functions may be released through the touch type control panel.

A detergent supply unit may be provided between a lower side of the tub 17 and the base cover 10c and may be drawn out or inserted in a drawer manner. A lower cover 14 may be rotatably provided below the front cover 10d in order to cover a front side of the detergent supply unit.

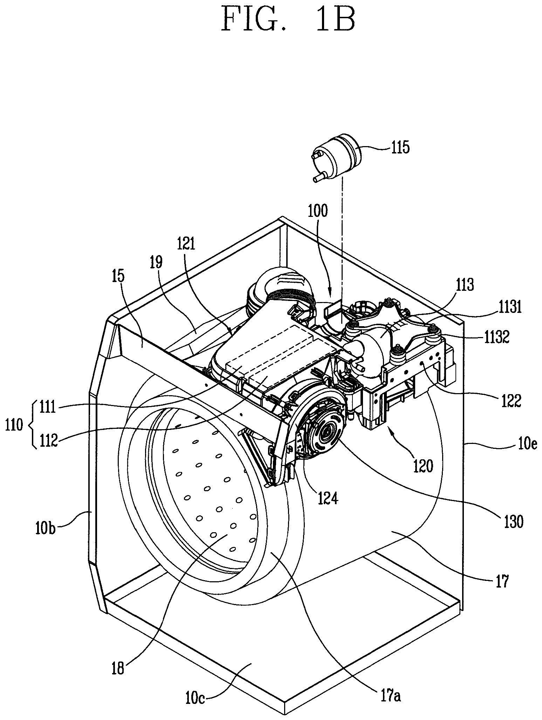

FIG. 1B is a perspective view illustrating a configuration in which a heat pump module is disposed above a tub.

A cylindrical tub 17 is provided within the cabinet 10. An opening communicating with the opening of the front cover 10d is formed on a front side of the tub 17 to allow laundry and a dry target to be taken in and out. A hollow part may be provided within the tub 17 to store washing water. A gasket 17a extends from the opening of the tub 17 to the opening of the front cover 10d in a circumferential direction to prevent leakage of washing water kept in the tub 17 to outside and prevent transmission of vibration generated in the tub 17 to the cabinet 10 when the drum 18 is rotated. The gasket 17a may be formed of a vibration insulating member such as rubber. An air outlet is formed on upper rear side of the tub 17 to allow air to be discharged from the tub 17. An air inlet is formed in an upper portion of the gasket 17a of the tub 17 to allow air to be introduced to the tub 17.

A cylindrical drum 18 is rotatably provided within the tub 17. The drum 18 has an accommodation space for accommodating laundry and a dry target therein, and has an opening formed on a front side of the drum 18 and communicating with the opening of the tub 17. The drum 18 has a plurality of through holes formed on an outer circumferential surface thereof to allow washing water and air to pass through the through holes between the drum 18 and the tub 17. A lifter is installed at an interval in a circumferential direction within the drum 18, to tumble laundry introduced to the inside of the drum 18. For example, in a washing cycle, washing water supplied to the tub 17 is introduced to the inside of the drum 18 through the through holes, and when the drum 18 is rotated, the laundry introduced to the inside of the drum 18 is wet to be washed. Also, in a drying cycle, hot air supplied to the inside of the tub 17 is introduced to the inside of the drum 18 through the through holes, and as the drum 18 rotates, moisture of laundry introduced to the inside of the drum 18 is evaporated by hot air to dry the laundry.

The heat pump module 100 integrally modularizes an evaporator 111, a compressor 113, a condenser 112, and an expansion valve 114 by the integral housing 120. A circulation fan 130 providing power to air and the vapor-liquid separator 115 separating a gas phase refrigerant and a liquid phase refrigerant may also be integrally installed by the integral housing 120.

The modularized heat pump module 100 is disposed between an upper portion of the tub 17 and a top cover 10a.

The integral housing 120 may include a heat exchange duct unit 121 accommodating the evaporator 111 and the condenser 112 and a compressor base part 122 supporting the compressor 113.

The heat exchange duct unit 121 is disposed on a front side in an upper portion of the tub 17, accommodates and supports the heat exchanger 110 therein, and is connected to the tub 17 to serve as a circulation duct forming a circulation flow channel for circulating air. The heat exchanger 110 includes an evaporator 111 and a condenser 112, and the evaporator 111 and the condenser 112 may be installed within the heat exchange duct unit 121 and spaced apart from each other in a direction perpendicular to a rotation central line of the drum.

The compressor base part 122 serves to support the compressor 113 disposed in a space between an upper portion of the tub 17 and a side corner of the cabinet 10.

The integral housing 120 may be supported in a forward/backward direction by a front side of the cabinet 10, for example, a front frame 15, and an upper portion of the back cover 10e as a rear side of the cabinet 10. A front side of the heat exchange duct unit 121 is in contact with a rear surface of the front frame 15 and fastened by a fastening member such as a screw, or the like. A rear side of the compressor base part 122 is in contact with a front side of the back cover 10e and fastened by a fastening member such as a screw.

The integral housing 120 may be disposed to be spaced apart from an upper outer circumferential surface of the tub 17 to prevent transmission of vibrations generated by the drum 18 when the drum 18 rotates, to the heat pump module 100 through the tub 17.

Also, since the evaporator 111, the compressor 113, the condenser 112, the expansion valve, and the like, forming a heat pump cycle are integrated by the integral housing 120, a disposition space of a heat pump system may be compactly optimized.

The heat pump module 100 intakes air discharged from the drum 18 and heat-exchanges it with the evaporator 111 to absorb heat from the air through the evaporator 111 and removes moistures in the air (dehumidification function of the heat pump module 100). Also, the heat pump module 100 heat-exchanges air discharged from the evaporator 111 with the condenser 112 to discharge heat from a refrigerant passing through the condenser 112 as air to be re-supplied to the inside of the tub through the condenser 112 (air heating function of the heat pump module 100).

The heat pump module 100 includes a circulation fan 130 intaking air discharged from the drum 18. The circulation fan 130 may be accommodated and supported in the fan duct unit 124, and may be integrally coupled to the right side of the heat exchange duct unit 121 by the fan duct unit 124.

The vapor-liquid separator 115 is installed in a vapor-liquid separator mounting part 123 and compactly disposed on the rear side of the heat exchange duct unit 121 above the tub 17. The vapor-liquid separator mounting part 123 is integrally formed between a rear side of the heat exchange duct unit 121 and the left side of the compressor base part 122. The vapor-liquid separator 115 is disposed between the evaporator 111 and the compressor 113, and may be connected to the evaporator 111 and the compressor by a refrigerant pipe. The vapor-liquid separator has a cylindrical shape. The vapor-liquid separator according to the present invention, as a horizontal vapor-liquid separator 115, may be compactly disposed even in a narrow space above the tub 17, and a inlet 1151a1 and a outlet 1151a2 are formed on the same side in order to avoid interference with other component. For example, the inlet 1151a1 and the outlet 1151a2 may be disposed to face each other toward the evaporator 111 of the heat exchange duct unit 121. The horizontal vapor-liquid separator 115 is horizontally disposed so as to be positioned to be lower than a height of the compressor 113.

A control unit controls a general operation of the clothes treatment apparatus, as well as the heat pump module 100. The control unit may include a PCB case having a flat rectangular box shape in which a height thereof is lower than a width and a length thereof, a PCB installed within the PCB case 19, and electric/electronic control components installed in the PCB.

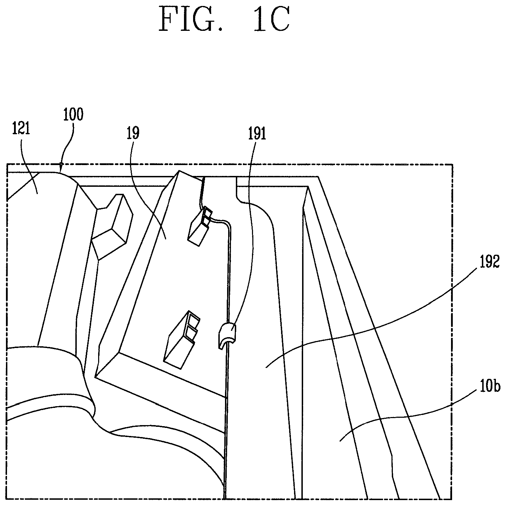

FIG. 1C is a rear perspective view illustrating a fixing structure of a PCB case of FIG. 1B.

The PCB case 19 may be disposed on a left side of the heat pump module 100 in a diagonal direction (when viewed from the front cover 10d) by using a space between the upper side of the tub 17 and the left side corner of the cabinet 10.

As for the PCB case 19, a width of the PCB case 19 is longer than a space between the center above the tub 17 and the left side cover 10b. Thus, in order to avoid interference of the PCB case 19 with other components and compactly configure the PCB case 19 together with the heat pump module 100, the PCB case 19 is preferably disposed in a downward direction of the left side from a central upper portion of the cabinet 10 when viewed from the front cover 10d. Here, the left side of the heat pump module 100 is positioned between the central upper portion of the cabinet 10 and the upper side of the tub 17 and a space from the left side corner of the cabinet 10 in a downward direction is larger than a space between the central upper portion of the cabinet 10 and the upper side of the tub 17, and thus, the PCB case 19 is disposed in a diagonal direction such that a right side thereof is disposed to face the left side of the heat pump module 100 and a left side of the PCB case 19 is disposed to face the left side cover 10b of the cabinet 10.

In order to stably support the PCB case 19 within the cabinet 10, the PCB case 19 may have a fixing protrusion 191 protruding from one side of an upper surface of the PCB case 19. An upper end portion of the fixing protrusion 191 may have a hook shape. Also, the cabinet 10 may have a fixing member 192 extending from one side of an upper end portion of the front cover 10d to one side of an upper end portion of the back cover 10e in order to support the PCB case 19. Since the upper end portion of the fixing protrusion 191 is supported to be caught on the side surface of the fixing member 192, the PCB case 19 may be stably supported between the left side corner of the cabinet 10 and the heat pump module 100 and compactly disposed.

The PCB case 19 is electrically connected to the heat pump module 100, and thus, performance of the heat pump module 100 may be inspected in units of modules before a complete product of the clothes treatment apparatus is assembled. Here, since the PCB case 19 is connected to the heat pump module 100 for performance inspection of the heat pump module 100, the PCB case 19 is preferably positioned to be close to the heat pump module 100.

Thus, since the PCB case 19 is disposed in a diagonal direction to be close on the side surface of the heat pump module 100 and connected to the heat pump module 100, the PCB case 19 may be compactly installed within the cabinet 10 together with the heat pump module 100.

Also, the compressor 113 may be disposed in the following structure to compactly effectively utilize a space above the tub 17.

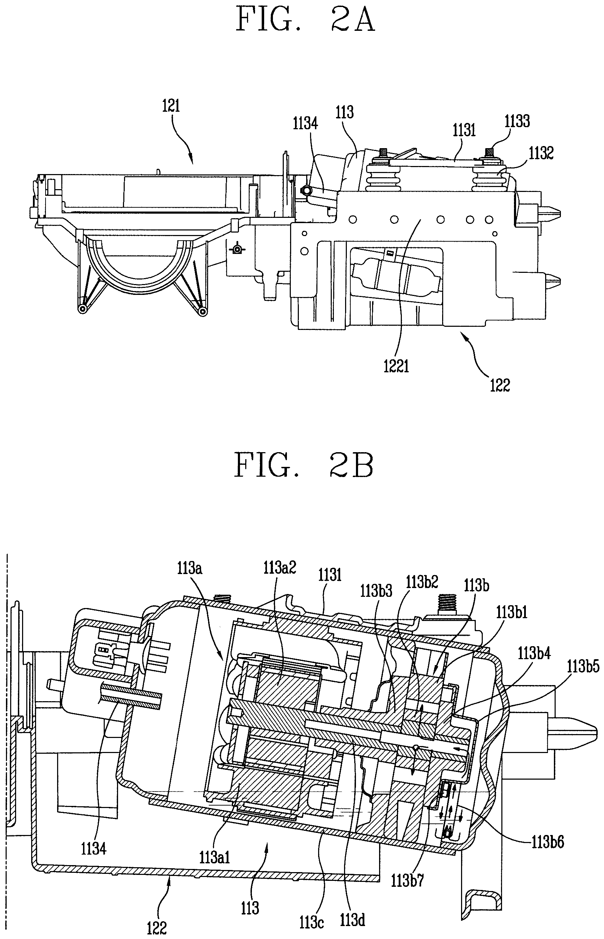

FIG. 2A is a side view of a compressor of FIG. 1B, viewed from the right side, and FIG. 2B is a cross-sectional view of the compressor of FIG. 2A.

The compressor 113 may be provided as a horizontal compressor 113. The horizontal compressor 113 may have an electric mechanism unit 113a and a compression mechanism unit 113b together within a compressor casing 113c and may be disposed to be parallel to a support surface. The compressor 113 may be disposed to lie down extendedly in a forward/backward direction of the cabinet 10. The compressor 113 may be disposed such that an outer circumferential surface thereof faces in vertical and horizontal directions and a front surface and a rear surface thereof face a front surface and a rear surface of the cabinet 10, respectively.

Also, the horizontal compressor 113 is provided such that a lower surface of the compressor base part 122, a support surface, is inclined with respect to a horizontal plane. For example, the horizontal compressor 113 is installed such that a rear portion of the compressor casing 113c is inclined downwardly with respect to a horizontal plane, allowing oil to gather in a side bearing of the compression mechanism unit 113b. Accordingly, an oil intake hole 1151a1 for intaking oil is immersed in oil all the time, and thus, oil may be smoothly supplied to the side bearing of the compression mechanism unit 113b. Preferably, a slope angle of the compressor 113 is ranges from 3° to 20° with respect to a horizontal line.

The electric mechanism unit 113a is integrally provided within the compressor 113 to provide a rotational force. The electric mechanism unit 113a may include a stator 113a1 fixed to the compressor casing 113c, a rotor 113a2 disposed within the stator 113a1, and a rotational shaft 113d press-fit to the inside of the rotor 113a2. The rotational shaft 113d may be disposed along a horizontal central line of the compressor casing 113c. The rotational shaft 113d is supported by a main bearing 113b3 and a sub-bearing 113b4.

The compressor 113 may be provided as a rotary compressor 113. The compressor 113 may have a compression mechanism unit 113b. The compression mechanism unit 113b may include a cylinder 113b1 and a rolling piston 113b2. The rolling piston 113b2 may be eccentrically coupled to an outer circumferential surface of the rotational shaft 113d and compress a refrigerant, while rotating along an inner circumferential surface of the cylinder 113b1. The main bearing 113b3 and the sub-bearing 113b4 allow a relative movement between the cylinder 113b1 and the rotational shaft 113d or between the cylinder 113b1 and the rolling piston 113b1.

An oil supply unit includes an oil cap 113b5 communicating with an end portion of an oil flow channel of the rotational shaft 113d, covering an outer surface of the sub-bearing 113b4, and having an oil accommodation space therein, an oil guide pipe 113b6 communicating with the oil cap 113b5, extending to a lower surface of the casing, and intaking oil of the lower surface of the casing to the oil cap 113b5, and an oil collecting pipe 113b7 communicating with a lower surface of the oil cap 113b5 and collecting oil to a lower surface of the casing.

Referring to an oil supply path of the compressor 113, when power is applied to the stator 113a1 of the motor part 113a, the rotor 113a2 is rotated according to an interaction with the stator 113a1, and the rotational shaft 113d coupled to the rotor 113a2 is rotated to transmit rotational force to the rolling piston 113b2 of the compression part 113b. Here, as the rolling piston 113b2 eccentrically rotates in the internal space of the cylinder 113b1, a refrigerant is sucked into the suction chamber of the cylinder 113b1, is continuously compressed to predetermined pressure, moves to a high pressure portion of the casing, and subsequently moves to a heat pump cycle through an outlet 1134 formed on a front surface of the casing. Here, oil at a low pressure portion is sucked to the oil cap 113b5 through the oil guide pipe 113b6, and the oil moves along an oil flow channel of the rotational shaft 113d and is supplied between the rolling piston 113b2 as a sliding portion of the compression part 113b and the cylinder 113b1 through an oil hole, thus performing a lubricating operation.

The compression mechanism unit 113b may be positioned on a front side of the compression casing 113c, the electric mechanism unit 113a may be positioned on a rear side of the compression casing 113c, and the side bearing of the compression mechanism unit is disposed to be sloped downwardly, whereby oil may be sufficiently supplied to the side bearing of the compression mechanism unit 113b.

The refrigerant outlet 1134 of the compressor 113 may be formed on a front side of the compression casing 113c to face the front frame 15 of the cabinet 10 or the circulation fan 130, and a refrigerant inlet 1151a1 of the compressor 113 may be formed on a lower side of an outer circumferential surface of the compressor casing 113c.

In order to reduce vibrations and noise generated in the compressor 113, a vibration-proof mount 1132 is provided on the compressor base part 122 to absorb vibrations of the compressor 113. Also, the fixed bracket 1131 are welded to at least three positions so as to be fixed to an upper portion of the compressor 113 and cover a portion of an upper outer circumferential surface of the compressor 113. The fixed bracket 1131 transfers vibrations of the compressor 113 to the vibration-proof mount 1132.

The fixed bracket 1131 and the vibration-proof mount 1132 are fixed to an upper portion of a support formed on a side surface of the compressor base part 122 by a fastening bolt.

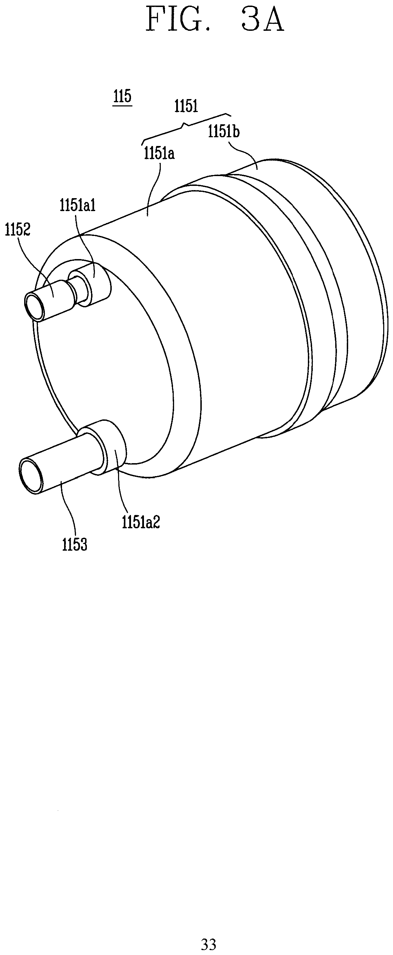

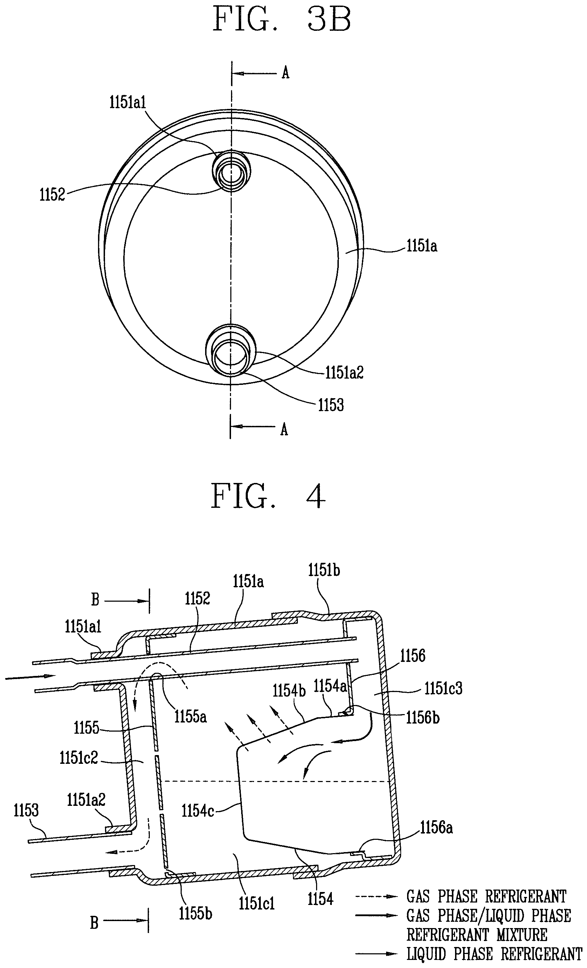

FIG. 3A is a perspective view illustrating a vapor-liquid separator of FIG. 1B, FIG. 3B is a front view of the vapor-liquid separator of FIG. 3A, viewed from the front side, and FIG. 4 is a cross-sectional view of FIG. 3B, taken along line A-A.

FIG. 3A illustrates an appearance of the horizontal vapor-liquid separator 115. The horizontal vapor-liquid separator 115 is compactly disposed in an internal space of the cabinet 10 together with the compressor 113, in particular, between an upper portion of the tub and an upper surface of the cabinet 10. For example, the horizontal vapor-liquid separator 115 is disposed such that a front side thereof is laid down to face a front side of the cabinet 10. The front side of the horizontal vapor-liquid separator 115 refers to a side seen when the horizontal vapor-liquid separator 115 is viewed at a front side of the cabinet 10. In a case in which the heat pump module is mounted above the tub, a front side of the vapor-liquid separator 115 may face a rear side of the heat exchange duct unit 121. Thus, when the compressor 113 and the vapor-liquid separator 115 are viewed from the side cover 10b of the cabinet 10, a height of the vapor-liquid separator 115 does not protrude upwardly or downwardly from the compressor 113, not increasing an overall height of the vapor-liquid separator 115 and the compressor 113. Thus, even in a case in which an installation space of the compressor 113 and the vapor-liquid separator 115 is narrow, the compressor 113 and the vapor-liquid separator 115 may be installed and the vapor-liquid separator 115 may be compactly disposed together with the compressor 113.

The horizontal vapor-liquid separator 115 includes a cylindrical casing 1151. An outer circumferential surface (circular curved surface) of the casing 1151 may be disposed to face in vertical and horizontal directions of the cabinet 10. A front side and a rear side of the casing 1151 may be formed as a flat surfaces, and a inlet and a outlet are formed on a front side of the casing. The inlet and outlet protrude in the same direction. A volume space having a predetermined size is provided within the casing 1151.

The cylindrical casing 1151 illustrated in FIG. 4 may include a first casing 1151a and a second casing 1151b having a cylindrical shape. The first casing 1151a may be disposed on the left side and the second casing 1151b may be disposed on the right side, facing each other, and end portions of the first casing 1151a and the second casing 1151b may be assembled in an overlapping manner in a thickness direction to form an airtight space within the casing 1151.

An inlet 1151a1 and an outlet 1151a2 are formed on a left side (front side of the casing in FIG. 3B) of the first casing 1151a. In order to suck a refrigerant to the inside of the casing 1151, the inlet 1151a1 is formed in an upper portion of a left side of the first casing 1151a, and the outlet is formed in a lower portion of the left side of the first casing 1151a in order to discharge a refrigerant to the outside of the casing 1151.

The inlet 1151a1 is formed at an upper end portion of the front side of the casing 1151, and the outlet is formed at a lower end portion of the front side of the casing 1151. The inlet 1151a1 of the vapor-liquid separator 115 is connected to a outlet of the evaporator by a suction pipe 1152, and the outlet of the vapor-liquid separator 115 is connected to an inlet of the compressor 113 by a discharge pipe 1153.

A first partition 1155 and a second partition 1156 are disposed to be spaced apart from each other in a length direction within the casing 1151 to divide an internal space of the casing 1151 into three sections. The first partition 1155 is disposed within the first casing 1151a, and the second partition 1156 is disposed within the second casing 1151b. Both end portions of the first partition 1155 and the second partition 1156 are bent by a predetermined length and press-fit to the inside of the first casing 1151a and the second casing 1151b to reinforce strength of the casing 1151. The first partition 1155 is disposed to be parallel to the left side of the first casing 1151a, and the second casing 1156 is disposed to be parallel to the right side of the second casing 1151b. The first partition 1155 and the second partition 1156 are disposed in a direction perpendicular to an outer circumferential surfaces of the first and second casings 1151a and 1151b. The first partition 1155 may be disposed to be adjacent to the left side of the first casing 1151a, and the second partition 1156 may be disposed to be adjacent to the right side of the second casing 1151b.

Among the three internal spaces, an internal space partitioned between the first partition 1155 and the second partition 1156 is a liquid storage part 1151c1 storing a liquid. For example, a liquid phase refrigerant or oil may be temporarily stored in the liquid storage part 1151c1.

Also, among the three internal spaces, a first internal space partitioned between a left side of the first casing 1151a and the first partition 1155 may form a flow channel for discharging a gas phase refrigerant, and a second internal space partition between a right side of the second casing 1151b and the second partition 1156 may form a return flow channel 1151c3 for returning a mixture of a gas phase refrigerant, a liquid phase refrigerant, and oil.

The suction pipe 1152 extends from a front side of the casing 1151 (the left side of the casing 1151a in FIG. 4) to an internal space of the casing 1151 through the inlet 1151a1 and penetrates through the first partition 1155 and the second partition 1156. Accordingly, a mixture of a gas phase refrigerant, a liquid phase refrigerant, oil, and the like, introduced through the suction pipe 1152 is independently separated, without being mixed with other fluid, and introduced to the return flow channel 1151c3 formed between the second partition 1156 and the right side of the casing 1151. The suction pipe 1152 is disposed to be parallel to an outer circumferential surface of the casing 1151.

A return hole 1156a is formed below the second partition 1156 and connects the return flow channel 1151c3 between the second partition 1156 and the right side of the casing 1151 and the liquid storage part 1151c1. Thus, a refrigerant mixture introduced along the suction pipe 1152 is returned to the liquid storage part 1151c1 through the return hole 1156a. A diameter of the return hole 1156a may be within a range of 1/3 to 3/4 of a height of the second partition. The reason for forming the return hole 1156a to be large is to secure a large suction and return amount of a refrigerant mixture fluid which has passed through the suction pipe 1152. Also, it is to secure a storage space of a liquid phase refrigerant and oil as much as possible through the return hole 1156a. That is, a liquid phase refrigerant and oil stored in the liquid storage part 1151c1 may be moved to the return flow channel 1151c3 through the return hole 1156a.

The filter unit 1154 may have a net shape, and may be formed of a material such as a metal having a predetermined strength to maintain a predetermined shape. A hole formed in the net may have a fine size, for example, a size of a few to hundreds of *µ*m. For example, the filter unit 1154 may filter out a foreign object such as an iron particle, or the like, having a size ranging from 0.01 mm to 1 mm generated in the compressor, the evaporator, and the like. When the net is formed of thread, a polymer resin, and the like, it may have a separate frame to maintain a predetermined shape. Also, the filter unit 1154 is configured to surround a circumference of the return hole 1156a to filter out and remove all the foreign objects included in a returned refrigerant mixture fluid. The filter unit 1154 may form a curved surface protruding from the second partition 1156 toward the first partition 1155, rather than a planar shape. The filter unit 1154 may include an installation part 1154a configured as an annular shape, a sloped portion 1154b slantingly extending from an end portion of the installation portion 1154a, and a connection portion 1154c extending in a vertical direction from an end portion of the sloped portion 1154b. The installation part 1154a of the filter unit 1154 may be fixed to the second partition 1156 through welding, or the like. Also, the installation part 1154a of the filter unit 1154 may be insertedly coupled to the second partition 1156 in an insertion manner. The second partition 1156 includes an annular filter fixing part 1156b for a connection to the filter unit 1154.

While passing through the filter unit 1154 from the liquid storage part 1151c1, a liquid phase refrigerant and oil having a specific gravity higher than that of the gas phase refrigerant sink to a lower surface of the liquid storage unit 1151c1, while a gas phase refrigerant having a low specific gravity may be moved to an upper side of the liquid storage unit 1151c1.

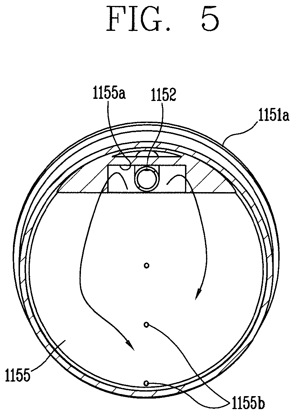

FIG. 5 is a cross-sectional view of FIG. 4, taken along line B-B.

Referring to FIG. 5, a communication hole 1155a has a rectangular shape in which a length is long in a horizontal direction in an upper portion of the first partition 1155. The suction pipe 1152 penetrates through the first partition 1155 through the communication hole 1155a. The communication hole 1155a is a hole for a gas phase refrigerant separated in the liquid storage space to move to the first internal space. A vertical length of the communication hole 1155a is substantially the same as a diameter of the suction pipe 1152, and a horizontal length of the communication hole 1155a is longer than a diameter of the suction pipe 1152, so that a gas phase refrigerant may move to the discharge flow channel 1151c2 through the communication hole 1155a, without being mixed with a gas/liquid phase refrigerant mixture, and may be moved to the compressor 113 through the outlet and the discharge pipe 1153 connected to the outlet 1151a2.

A refrigerant of the heat pump module 100 includes a portion of oil stored in the compressor 113 in the process of being compressed by the compressor 113, and may circulate to the compressor 113, the condenser 112, the expansion valve, and the evaporator 111. Here, before the refrigerant is introduced to the compressor 113 from the evaporator 111, the liquid-phase separator 115 may separate oil from the liquid phase refrigerant and return the oil to the compressor 113.

In order to separate oil from the liquid phase refrigerant in the vapor-liquid separator 115, a plurality of oil return holes 1155b are formed on the first partition 1155. The oil return hole 1155b may be spaced apart from a lower end of the first partition 1155 in an upward direction.

Oil stored in the liquid storage part 1151c1 has specific gravity grater than that of a liquid phase refrigerant, and thus, oil may sink to be lower than the liquid phase refrigerant, and oil has a high possibility of being returned through the oil return hole 1155b positioned at the lowermost stage of the plurality of oil return holes 1155b.

Also, since the oil return hole 1155b is very small, ranging from 1 mm to 3 mm, for example. Thus, even through a portion of the liquid phase refrigerant stored in the liquid storage unit 1151c1 flows out through the oil return hole 1155b, since it is very small, it is evaporated. Here, the gas phase refrigerant and oil are not mixed with each other.

The casing 1151 may be disposed such that a front side is lower than a rear side (the right side in FIG. 4) thereof. The casing 1151 may be disposed to be downwardly sloped toward the discharge pipe 1153 with respect to the top cover 10a of the cabinet 10. This is to allow oil to easily gather to the outlet of the casing 1151 from the liquid storage part 1151c1 by gravitation, to thereby increase a return amount of oil through the oil return hole 1155b.

## Claims

1. A clothes treating apparatus comprising:
a cabinet (10) with a top cover (10a);
a drum (18) rotatably provided within the cabinet (10) and receiving laundry or a dry target; and
a heat pump module (100) comprising an evaporator (111), a vapor-liquid separator (115), a compressor (113), a condenser (112), and an expansion valve (114), wherein said heat pump module is configured to circulate a refrigerant by the evaporator (111), the vapor-liquid separator (115), the compressor (113), the condenser (112), and the expansion valve (114), and to circulate air discharged from the drum (18) back to the drum (18) by way of the evaporator (111) and the condenser (112),
wherein the vapor-liquid separator (115) includes:
a casing (1151) having an accommodation space therein, formed in a cylindrical shape;
an inlet (1151a1) formed in the casing (1151) and allowing a refrigerant mixture fluid to be intaken to the accommodation space therethrough;
an outlet (1151a2) formed on the side of the inlet (1151) and allowing a gas phase refrigerant separated from the refrigerant mixture fluid to be discharged therethrough;
a first partition (1155) comprising a communication hole (1155a) dividing the accommodation space into a discharge flow channel (1151c2) discharging the gas phase refrigerant and a liquid storage part (1151c1) providing a storage space for a liquid phase refrigerant and/or oil separated from the refrigerant mixture fluid;
a suction pipe (1152) extending to the accommodation space through the inlet (1151a1) and passing through the first partition (1155) through the communication hole (1155a), wherein the communication hole (1155a) is larger than the diameter of the suction pipe (1152) so as to allow for a flow of gaseous refrigerant towards the outlet (1151a2),
wherein the first partition (1155) protrudes from a lower surface of the casing (1151) in a direction perpendicular to an outer circumferential surface of the casing (1151), facing the inlet (1151a1) and the outlet (1151a2), and disposed to be spaced apart from the side on which the inlet (1151a1) and the outlet (1151a2) are formed,
wherein an oil return hole (1155b) is formed in the first partition (1155), wherein the casing (1151) is disposed to be downwardly sloped toward the outlet (1151a2) with respect to the top cover (10a) of the cabinet (10).

2. The clothes treating apparatus of claim 1, wherein the outlet (1151a2) is formed to be spaced apart from the inlet (1151a1) on the same side of the casing (1151), and the inlet (1151a1) is formed in an upper portion of the same side, and the outlet (1151a2) is disposed in a lower portion of the same side.

3. The clothes treating apparatus of claim 1 or 2, wherein the communication hole (1155a) connecting the discharge flow channel (1151c2) and the liquid storage part is formed at an upper portion of the first partition (1155).

4. The clothes treating apparatus of any one of claims 1 to 3, further comprising:
a second partition (1156) formed within the casing (1151) in a direction perpendicular to an outer circumferential surface of the casing (1151), and disposed to be spaced apart from the side of the casing (1151) opposing the inlet (1151a1) and the outlet (115a2).

5. The clothes treating apparatus of claim 4, wherein the second partition (1156) has a return hole forming a return flow channel (1151c3) of a refrigerant mixture fluid returned toward the outlet (1151a2).

6. The clothes treating apparatus of claim 5, wherein the second partition (1156) has a filter unit (1154) filtering out a foreign object included in the returned refrigerant mixture fluid.

7. The clothes treating apparatus of claim 6, wherein the filter unit (1154) is provided such that one side thereof surrounds the return hole and the other side protrudes toward the outlet (1151a2).

## Patentansprüche

1. Wäschebehandlungsvorrichtung, die aufweist:
ein Gehäuse (10) mit einer oberen Abdeckung (10a);
eine Trommel (18), die drehbar in dem Gehäuse (10) vorgesehen ist und Wäsche oder ein Trockenobjekt aufnimmt; und
ein Wärmepumpenmodul (100), das einen Verdampfer (111), einen Dampf-Flüssigkeits-Abscheider (115), einen Verdichter (113), einen Kondensator (112) und ein Expansionsventil (114) aufweist, wobei das Wärmepumpenmodul konfiguriert ist, ein Kältemittel durch den Verdampfer (111), den Dampf-Flüssigkeits-Abscheider (115), den Verdichter (113), den Kondensator (112) und das Expansionsventil (114) umzuwälzen und aus der Trommel (18) abgegebene Luft über den Verdampfer (111) und den Kondensator (112) zurück zu der Trommel (18) umzuwälzen,
wobei der Dampf-Flüssigkeits-Abscheider (115) aufweist:
ein Gehäuse (1151) mit einem Aufnahmeraum darin, der in einer zylindrischen Form ausgebildet ist;
einen Einlass (1151a1), der in dem Gehäuse (1151) ausgebildet ist und es ermöglicht, dass ein Kältemittelmischfluid durch diesen in den Aufnahmeraum eingelassen wird;
einen Auslass (1151a2), der auf der Seite des Einlasses (1151) ausgebildet ist und es ermöglicht, dass ein von dem Kältemittelmischfluid getrenntes Gasphasenkältemittel durch diesen abgelassen wird;
eine erste Trennwand (1155), die eine Verbindungsöffnung (1155a) aufweist, die den Aufnahmeraum in einen Auslassströmungskanal (1151c2), der das Gasphasenkältemittel ausstößt, und einen Flüssigkeitsspeicherteil (1151c1) unterteilt, der einen Speicherraum für ein Flüssigphasenkältemittel und/oder Öl bereitstellt, das von dem Kältemittelmischfluid abgeschieden wird;
ein Ansaugrohr (1152), das sich durch den Einlass (1151a1) zu dem Aufnahmeraum erstreckt und durch die erste Trennwand (1155) durch die Verbindungsöffnung (1155a) hindurchgeht, wobei die Verbindungsöffnung (1155a) größer als der Durchmesser des Ansaugrohrs (1152) ist, um eine Strömung von gasförmigem Kältemittel zum Auslass (1151a2) zu ermöglichen,
wobei die erste Trennwand (1155) von einer unteren Fläche des Gehäuses (1151) in einer Richtung senkrecht zu einer Außenumfangsfläche des Gehäuses (1151) vorsteht, dem Einlass (1151a1) und dem Auslass (1151a2) zugewandt ist und so angeordnet ist, dass sie von der Seite beabstandet ist, auf der der Einlass (1151a1) und der Auslass (1151a2) ausgebildet sind, wobei eine Ölrücklauföffnung (1155b) in der ersten Trennwand (1155) ausgebildet ist, wobei das Gehäuse (1151) so angeordnet ist, dass es in Bezug auf die obere Abdeckung (10a) des Gehäuses (10) zum Auslass (1151a2) nach unten geneigt ist.

2. Wäschebehandlungsvorrichtung nach Anspruch 1, wobei der Auslass (1151a2) so ausgebildet ist, dass er vom Einlass (1151a1) auf der gleichen Seite des Gehäuses (1151) beabstandet ist, und der Einlass (1151a1) in einem oberen Abschnitt der gleichen Seite ausgebildet ist und der Auslass (1151a2) in einem unteren Abschnitt der gleichen Seite angeordnet ist.

3. Wäschebehandlungsvorrichtung nach Anspruch 1 oder 2, wobei die Verbindungsöffnung (1155a), die den Auslassströmungskanal (1151c2) und den Flüssigkeitsspeicherteil verbindet, an einem oberen Abschnitt der ersten Trennwand (1155) ausgebildet ist.

4. Wäschebehandlungsvorrichtung nach einem der Ansprüche 1 bis 3, die ferner aufweist:
eine zweite Trennwand (1156), die innerhalb des Gehäuses (1151) in einer Richtung senkrecht zu einer Außenumfangsfläche des Gehäuses (1151) ausgebildet und so angeordnet ist, dass sie von der Seite des Gehäuses (1151) beabstandet ist, die dem Einlass (1151a1) und dem Auslass (115a2) gegenüberliegt.

5. Wäschebehandlungsvorrichtung nach Anspruch 4, wobei die zweite Trennwand (1156) eine Rücklauföffnung aufweist, das einen Rücklaufkanal (1151c3) für ein Kältemittelmischfluid bildet, das zum Auslass (1151a2) zurückgeführt wird.

6. Wäschebehandlungsvorrichtung nach Anspruch 5, wobei die zweite Trennwand (1156) eine Filtereinheit (1154) aufweist, die einen Fremdkörper herausfiltert, der in dem zurückgeführten Kältemittelmischfluid vorhanden ist.

7. Wäschebehandlungsvorrichtung nach Anspruch 6, wobei die Filtereinheit (1154) so vorgesehen ist, dass eine Seite davon die Rücklauföffnung umgibt und die andere Seite zum Auslass (1151a2) vorsteht.

## Revendications

1. Machine à traiter les vêtements, comprenant :
une carrosserie (10) munie d'un couvercle supérieur (10a) ;
un tambour (18) prévu de manière rotative à l'intérieur de la carrosserie (10) et recevant du linge ou un article sec ; et
un module de pompe à chaleur (100) comprenant un évaporateur (111), un séparateur vapeur-liquide (115), un compresseur (113), un condenseur (112) et un détendeur (114), ledit module de pompe à chaleur étant prévu pour faire circuler un réfrigérant par l'intermédiaire de l'évaporateur (111), du séparateur vapeur-liquide (115), du compresseur (113), du condenseur (112) et du détendeur (114), et pour retourner vers le tambour (18) l'air refoulé du tambour (18) par l'intermédiaire de l'évaporateur (111) et du condenseur (112),
où le séparateur vapeur-liquide (115) comprend :
un boîtier (1151) contenant un espace de réception de forme cylindrique ;
une entrée (1151a1) formée dans le boîtier (1151) et permettant à un fluide de mélange réfrigérant d'être introduit dans l'espace de réception ;
une sortie (1151a2) formée sur le côté de l'entrée (1151) et permettant l'évacuation d'un réfrigérant en phase gazeuse séparé du fluide de mélange réfrigérant ;
une première cloison (1155) comprenant un trou de communication (1155a) divisant l'espace de réception en un canal de flux de refoulement (1151c2) évacuant le réfrigérant en phase gazeuse et une partie de stockage de liquide (1151c1) présentant un espace de stockage pour un réfrigérant en phase liquide et/ou de l'huile séparée du fluide de mélange réfrigérant ;
une conduite d'aspiration (1152) s'étendant jusqu'à l'espace de réception par l'entrée (1151a1) et traversant la première cloison (1155) par le trou de communication (1155a), ledit trou de communication (1155a) étant de dimension supérieure au diamètre du tuyau d'aspiration (1152) de manière à permettre l'écoulement du réfrigérant gazeux vers la sortie (1151a2),
où la première cloison (1155) fait saillie d'une surface inférieure du boîtier (1151) dans une direction perpendiculaire à une surface circonférentielle extérieure du boîtier (1151), face à l'entrée (1151a1) et à la sortie (1151a2), et est disposée de manière à être espacée du côté où sont formées l'entrée (1151a1) et la sortie (1151a2),
où un trou de retour d'huile (1155b) est formé dans la première cloison (1155),
où le boîtier (1151) est disposé de manière à être incliné vers le bas en direction de la sortie (1151a2) par rapport au couvercle supérieur (10a) de la carrosserie (10).

2. Machine à traiter les vêtements selon la revendication 1, où la sortie (1151a2) est formée de manière à être espacée de l'entrée (1151a1) sur le même côté du boîtier (1151), et où l'entrée (1151a1) est formée dans une partie supérieure du même côté, et la sortie (1151a2) est disposée dans une partie inférieure du même côté.

3. Machine à traiter les vêtements selon la revendication 1 ou la revendication 2, où le trou de communication (1155a) reliant le canal de flux de refoulement (1151c2) et la partie de stockage de liquide est formé à une partie supérieure de la première cloison (1155).

4. Machine à traiter les vêtements selon l'une des revendications 1 à 3, comprenant en outre :
une deuxième cloison (1156) formée à l'intérieur du boîtier (1151) dans une direction perpendiculaire à une surface circonférentielle extérieure du boîtier (1151), et disposée de manière à être espacée du côté du boîtier (1151) opposé à l'entrée (1151a1) et à la sortie (115a2).

5. Machine à traiter les vêtements selon la revendication 4, où la deuxième cloison (1156) comporte un trou de retour formant un canal de flux de retour (1151c3) d'un fluide de mélange réfrigérant retourné vers la sortie (1151a2).

6. Machine à traiter les vêtements selon la revendication 5, où la deuxième cloison (1156) comporte une unité de filtre (1154) filtrant une matière étrangère contenue dans le fluide de mélange de réfrigérant retourné.

7. Machine à traiter les vêtements selon la revendication 6, où l'unité de filtre (1154) est prévue de sorte qu'un de ses côtés entoure l'orifice de retour et que l'autre côté fait saillie vers la sortie (1151a2).
